(19) Europäisches Patentamt
European Patent Office
Office européen des brevets

(11) **EP 3 709 647 A1**

(12) **EUROPEAN PATENT APPLICATION**

(43) Date of publication:
**16.09.2020 Bulletin 2020/38**

(51) Int Cl.:
**H04N 19/176** (2014.01)   **H04N 19/61** (2014.01)
**H04N 19/12** (2014.01)   **H04N 19/70** (2014.01)

(21) Application number: **19305288.3**

(22) Date of filing: **12.03.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **InterDigital VC Holdings, Inc.
Wilmington, DE 19809 (US)**

(72) Inventors:
• **LELEANNEC, Fabrice**
  **35576 Cesson-Sévigné (FR)**
• **POIRIER, Tangi**
  **35576 Cesson-Sévigné (FR)**
• **NASER, Karam**
  **35576 Cesson-Sévigné (FR)**

(74) Representative: **Huchet, Anne
  InterDigital CE Patent Holdings
  20, rue Rouget de Lisle
  92130 Issy-les-Moulineaux (FR)**

(54) **TRANSFORM SELECTION AND SIGNALING FOR VIDEO ENCODING OR DECODING**

(57) In at least one embodiment, a method and apparatus for encoding/decoding a picture comprising the selection of a transform amongst a set of transform functions and the signaling of the selected transform in a bitstream at the encoding side and determining the inverse transform from the bitstream and using the determined inverse transform function to decode the picture from the bitstream at the decoder side.

**FIG. 4**

FIG. 4 flowchart:
- Start (400)
- Accessing a bitstream (410)
- decoding information identifying an inverse transform (420)
- decoding a block of transform coefficients (430)
- transforming a block of residual coefficients into a block of residuals using said identified inverse transform (440)
- Obtaining decoded picture block from block of residuals and a predictor (450)
- End (460)

**Description**

TECHNICAL FIELD

At least one of the present embodiments generally relates to transform selection and signaling for video encoding or decoding.

BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

One or more of the present embodiments provide a method and apparatus for encoding/decoding a picture comprises the selection of a transform amongst a set of transform functions and the signaling of the selected transform.
According to a first aspect of at least one embodiment, a method for encoding picture data is presented and comprises obtaining information related to a picture block, at least comprising residuals, selecting, amongst a set of transform function, the transform function providing the minimal rate distortion, transforming the residuals into transform coefficients using the selected transform function, encoding said block of transform coefficients and at least data representative of the selected transform function into a bitstream.
According to a second aspect of at least one embodiment, a method for decoding picture data is presented and comprises decoding from a bitstream information representative of a transform function, decoding a block of transform coefficients into residual coefficients, transforming the residual coefficients into a block of residuals using the inverse function of identified transform function, decoding picture data from block of residuals.
According to a third aspect of at least one embodiment, an apparatus for encoding picture data is presented and comprises an encoder for encoding picture data, the encoder being configured to obtain information related to a picture block, at least comprising residuals, select, amongst a set of transform function, the transform function providing the minimal rate distortion, transform the residuals into transform coefficients using the selected transform function, and encode said block of transform coefficients and at least data representative of the selected transform function into a bitstream.
According to a fourth aspect of at least one embodiment, an apparatus for decoding picture data is presented and comprises an decoder for decoding picture data, the decoder being configured to decode from a bitstream information representative of a transform function, decode a block of transform coefficients into residual coefficients, transform the residual coefficients into a block of residuals using the inverse function of identified transform function, and decode picture data from block of residuals.
According to a fifth aspect of at least one embodiment, a video signal including a bitstream having video content and high-level syntax information is presented, said bitstream being generated according to the first or third aspect, said high level syntax information comprising at least at least one parameter to identify the transform function used for at least one block of a picture of the video content.
According to a sixth aspect of at least one embodiment, a computer program comprising program code instructions executable by a processor is presented, the computer program implementing the steps of a method according to at least the first or second aspect.
According to an eighth aspect of at least one embodiment, a computer program product which is stored on a non-transitory computer readable medium and comprises program code instructions executable by a processor is presented, the computer program product implementing the steps of a method according to at least the first or second aspect.

BRIEF DESCRIPTION OF THE DRAWINGS

FIG. 1 illustrates a block diagram of an example of video encoder 100.
FIG. 2 illustrates a block diagram of an example of video decoder 200.
FIG.3 illustrates a flowchart of a method for encoding a picture block in a bitstream according to a specific and non-limiting embodiment.

FIG.4 illustrates a flowchart of a method for decoding a picture block from a bitstream according to a specific and non-limiting embodiment.

FIG.5 illustrates a table of the transform possibilities of conventional encoding systems.

FIG.6A illustrates a transform table according to a second specific and non-limiting embodiment.

FIG.6B illustrates a transform table according to a variant of the second embodiment.

FIG.6C illustrates a transform table according to a third specific and non-limiting embodiment.

FIG.6D illustrates a transform table according to a variant of the third embodiment.

FIG.7 illustrate a transform table according to a fourth specific and non-limiting embodiment.

FIG.8 illustrates a transform table according to a fifth specific and non-limiting embodiment.

FIG.9A illustrates a transform table according to a sixth specific and non-limiting embodiment.

FIG.9B illustrates a second table according to the sixth embodiment.

FIG.9C illustrates an example of transform table according to a sixth specific and non-limiting embodiment with 3 transforms.

FIG.9D illustrates an example of second table according to the sixth embodiment with 3 transforms.

FIG.9E illustrates an example of result of the transform table according to a sixth specific and non-limiting embodiment with 3 transforms.

FIG. 10 illustrates a block diagram of an example of a system in which various aspects and embodiments are implemented.

## DETAILED DESCRIPTION

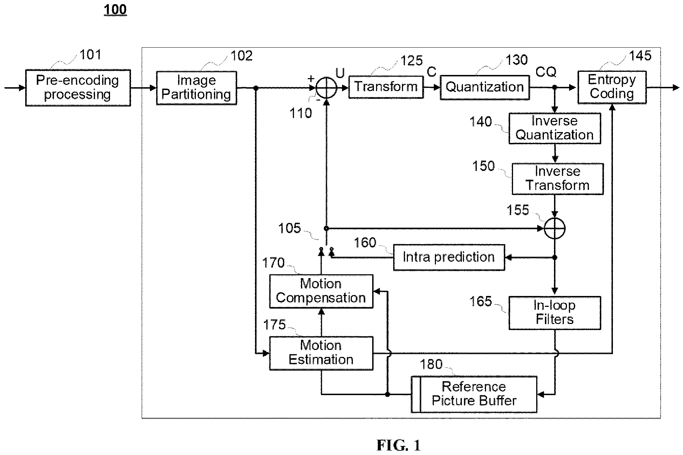

**FIG. 1** illustrates block diagram of an example of video encoder 100. A High Efficiency Video Coding (HEVC) encoder is one example of video encoder. FIG. 1 may also illustrate an encoder in which improvements are made to the HEVC standard or an encoder employing technologies similar to HEVC, such as a JEM (Joint Exploration Model) encoder under development by JVET (Joint Video Exploration Team).

Before being encoded, the video sequence can go through pre-encoding processing (101). This is for example performed by applying a color transform to the input color picture (for example, conversion from RGB 4:4:4 to YCbCr 4:2:0) or performing a remapping of the input picture components in order to get a signal distribution more resilient to compression (for instance using a histogram equalization of one of the color components). Metadata can be associated with the pre-processing and attached to the bitstream.

In HEVC, to encode a video sequence with one or more pictures, a picture is partitioned (102) into one or more slices where each slice can include one or more slice segments. A slice segment is organized into coding units, prediction units, and transform units. The HEVC specification distinguishes between "blocks" and "units," where a "block" addresses a specific area in a sample array (for example, luma, Y), and the "unit" includes the collocated blocks of all encoded color components (Y, Cb, Cr, or monochrome), syntax elements, and prediction data that are associated with the blocks (for example, motion vectors).

For coding in HEVC, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" can be used to refer, for example, to any of CTU, CU, PU, TU, CB, PB, and TB. In addition, the "block" can also be used to refer to a macroblock and a partition as specified in H.264/AVC or other video coding standards, and more generally to refer to an array of data of various sizes.

In the example of encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU and indicates the intra/inter decision by a prediction mode flag. Prediction residuals are calculated by subtracting (110) the predicted block from the original image block.

CUs in intra mode are predicted from reconstructed neighboring samples within the same slice. A set of 35 intra prediction modes is available in HEVC, including a DC, a planar, and 33 angular prediction modes. The intra prediction reference is reconstructed from the row and column adjacent to the current block. The reference extends over two times the block size in the horizontal and vertical directions using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed. The motion information (for example, motion vector and reference picture index) can be signaled in two methods, namely, "merge mode" and "advanced motion vector prediction (AMVP)".

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

The prediction residuals are then transformed (125) and quantized (130), including at least one embodiment for adapting the chroma quantization parameter described below. The transforms are generally based on separable transforms. For instance, a DCT transform is first applied in the horizontal direction, then in the vertical direction. In recent codecs such as the JEM, the transforms used in both directions may differ (for example, DCT in one direction, DST in the other one), which leads to a wide variety of 2D transforms, while in previous codecs, the variety of 2D transforms for a given block size is usually limited.

The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, that is, the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

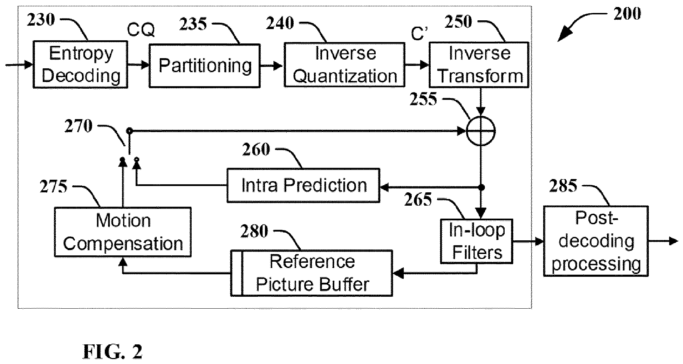

**FIG. 2** illustrates a block diagram of an example of video decoder 200. An HEVC decoder is one example of video decoder. In the example of decoder 200, a bitstream is decoded by the decoder elements as described below. Video decoder 200 generally performs a decoding pass reciprocal to the encoding pass as described in FIG. 1, which performs video decoding as part of encoding video data. FIG. 2 may also illustrate a decoder in which improvements are made to the HEVC standard or a decoder employing technologies similar to HEVC, such as a JEM decoder.

In particular, the input of the decoder includes a video bitstream, which may be generated by video encoder 100. The bitstream is first entropy decoded (230) to obtain transform coefficients, motion vectors, picture partitioning information, and other coded information. The picture partitioning information indicates the size of the CTUs, and a manner a CTU is split into CUs, and possibly into PUs when applicable. The decoder may therefore divide (235) the picture into CTUs, and each CTU into CUs, according to the decoded picture partitioning information. The transform coefficients are de-quantized (240) including at least one embodiment for adapting the chroma quantization parameter described below and inverse transformed (250) to decode the prediction residuals.

Combining (255) the decoded prediction residuals and the predicted block, an image block is reconstructed. The predicted block may be obtained (270) from intra prediction (260) or motion-compensated prediction (that is, inter prediction) (275). As described above, AMVP and merge mode techniques may be used to derive motion vectors for motion compensation, which may use interpolation filters to calculate interpolated values for sub-integer samples of a reference block. In-loop filters (265) are applied to the reconstructed image. The filtered image is stored at a reference picture buffer (280).

The decoded picture can further go through post-decoding processing (285), for example, an inverse color transform (for example conversion from YCbCr 4:2:0 to RGB 4:4:4) or an inverse remapping performing the inverse of the remapping process performed in the pre-encoding processing (101). The post-decoding processing may use metadata derived in the pre-encoding processing and signaled in the bitstream.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side. The term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of numerous sizes.

The transform operation is now described. The residuals are transformed (125) into transform coefficients, also sometimes denoted as residual coefficients. In former video compression schemes, e.g. in HEVC, DCT-II is most often used. In more recent video compression schemes, new transform schemes are proposed that use multiple selected transforms from the DCT/DST families other than the HEVC conventional transforms (i.e. DCT-II and 4x4 DST VII). Some of these more recent transforms are DST-VII, DCT-VIII, DST-I and DCT-V. Table 1 shows the basis functions of the newly introduced DST/DCT. This set includes a transform DCT-VIII with a decreasing lowest frequency basis function, a transform DST-VII with an increasing lowest frequency basis function, a transform DCT-V with a quasi-constant lowest frequency basis function and a transform DST-VII with a centrally oriented lowest basis function. Other transforms with an increasing basis functions are DST-III, DST-IV and DST-VIII. The lowest frequency basis functions are the most important ones, since the typical residual signals are encoded by the first few coefficients.

*Table 1*

| Transform Type | Basis function $T_i(j)$, $i,j = 0, 1, ..., N-1$ |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ $$\text{where } \omega_0 = \begin{cases} \sqrt{\frac{2}{N}} & i = 0 \\ 1 & i \neq 0 \end{cases}$$ |
| DCT-V | $$T_i(j) = \omega_0 \cdot \omega_1 \cdot \sqrt{\frac{2}{2N-1}} \cdot \cos\left(\frac{2\pi \cdot i \cdot j}{2N-1}\right),$$ $$\text{where } \omega_0 = \begin{cases} \sqrt{\frac{2}{N}} & i = 0 \\ 1 & i \neq 0 \end{cases}, \omega_1 = \begin{cases} \sqrt{\frac{2}{N}} & j = 0 \\ 1 & j \neq 0 \end{cases}$$ |
| DCT-VIII | $$T_i(j) = \sqrt{\frac{4}{2N+1}} \cdot \cos\left(\frac{\pi \cdot (2i+1) \cdot (2j+1)}{4N+2}\right)$$ |
| DST-I | $$T_i(j) = \sqrt{\frac{2}{N+1}} \cdot \sin\left(\frac{\pi \cdot (i+1) \cdot (j+1)}{N+1}\right)$$ |
| DST-VII | $$T_i(j) = \sqrt{\frac{4}{2N+1}} \cdot \sin\left(\frac{\pi \cdot (2i+1) \cdot (j+1)}{2N+1}\right)$$ |

Adding these transforms increases the encoder and decoder complexity and memory requirement. Indeed, the implementation of the transform process is achieved either by specific fast implementations, each one being specific to each transform type and block size, or by matrix multiplications which require loading forward and inverse transform matrices for each transform type and block size. The transforms of Table 1 have the following properties:

DCT-VIII is the reverse of DST-VII with some appropriate sign change;

DST-II is obtained from DCT-II by appropriate sign changing and then reversing;

The inverse of DST-VII is DST-VI;

DCT-VIII is self-inverse;

DCT-V basis functions are very similar to those of DCT-II.

For a vector of N elements, its reverse is achieved by scanning it from its end to its beginning. Mathematically speaking, for a vector $A(i)$, $i \in [0;N-1]$, the vector $B(i) = A(N-1-i)$ is the reverse of $A(i)$. According to an embodiment, these properties are used to decrease the number of additional transforms to be implemented, while preserving the coding efficiency at least partially. In a specific embodiment, the DCT-VIII is used as the single additional transform. In a variant, two additional transforms. As a result, the number of additional transforms is 1 or 2 while JEM design uses 4 additional transforms.

The transform coefficients are then quantized (130). The quantized transform coefficients, as well as motion vectors and other syntax elements, are entropy coded (145) to output a bitstream. The encoder may also skip the transform or bypass both transform and quantization, i.e., the residual is coded directly without the application of the transform or quantization processes. In direct PCM coding, no prediction is applied and the coding unit samples are directly coded into the bitstream.

The entropy coding may be, e.g., Context Adaptive Binary Arithmetic Coding (CABAC), Context Adaptive Variable Length Coding (CAVLC), Huffman, arithmetic, exp-Golomb, etc. CABAC is a method of entropy coding first introduced in H.264 and also used in HEVC. CABAC involves binarization, context modeling and binary arithmetic coding. Binarization maps the syntax elements to binary symbols (bins). Context modeling determines the probability of each regularly coded bin (i.e. non-bypassed) based on some specific context. Finally, binary arithmetic coding compresses the bins to bits according to the determined probability.

The encoder comprises a decoding loop and thus decodes an encoded block to provide a reference for further predictions. The quantized transform coefficients are de-quantized (140) and inverse transformed (150) to decode residuals. A picture block is reconstructed by combining (155) the decoded residuals and the predicted block. An in-loop filter (165) is applied to the reconstructed picture, for example, to perform deblocking/SAO (Sample Adaptive Offset) filtering to reduce coding artifacts. The filtered picture may be stored in a reference picture buffer (180) and used as reference for other pictures.

Another tool named Shape Adaptive Tool (SAT) uses a pair of predefined horizontal and vertical transform according to the dimension of the considered transform block. Namely, DCT-II is considered for the larger dimension (width or height) and DST-VII is used for the other one. If both with and height are equal, DCT-II is used for both directions. Additionally, if DST-VII is not supported for any direction, due to non-available design of DST-VII for sizes larger than 32x32, DCT-II is used instead. The main idea behind the shape adaptive transform is to capture as much of the coding efficiency, while restricting the selection of the transform to solely one pair of transforms. That is, MTS and core transform of DCT-II can be disabled and only shape adaptive transform is allowed.

In addition, Intra Sub-Partitioning (ISP) is a new tool that is based on splitting (vertically or horizontally) the intra-predicted block into 4 parallel equidistant subblocks, where the same prediction mode is shared between the transforms. The transform pairs of the subblocks are the same. They are selected based on the intra-prediction mode, where a combination of DCT-II and DST-VII is predefined.

Furthermore, Sub-Block Transform (SBT) is a tool for inter-predicted residuals, where the considered block is split (horizontally or vertically) into two subblocks either into two halves or one quarter and three quarters. The transform selection for the subblock is as follows: The first block uses a predefined pair of DST-VII and DCT-VIII and the other residual is set to zero. The first block is not necessarily the top/left one, but rather specified by signaling.

As seen above, the transform design is highly inhomogeneous, where each process has its own transform strategy. Additionally, some of the recent tools contain only one transform. This is fewer than the default blocks which have 4 MTS pairs in addition to the transform skip and the core DCT-II transform. The restriction is desired to reduce the encoding complexity, but it may induce a reduction in the coding efficiency.

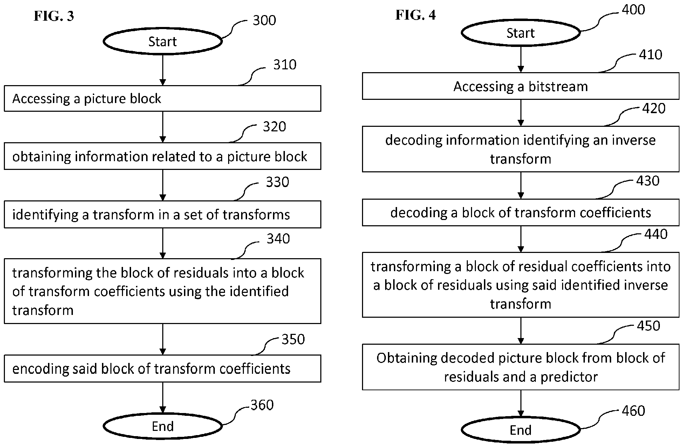

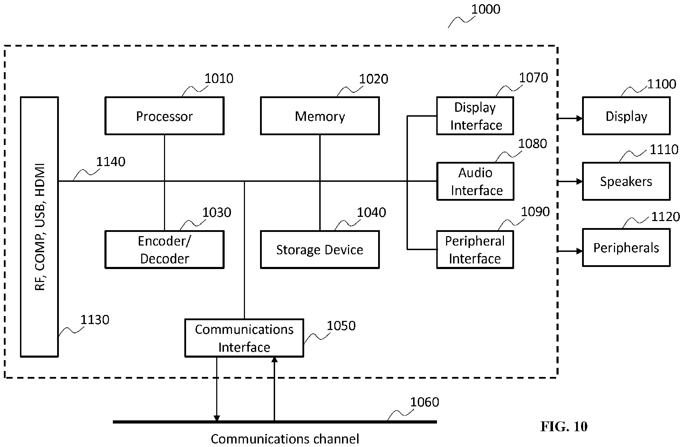

**FIG.3** illustrates a flowchart of a method for encoding a picture block in a bitstream according to a specific and non-limiting embodiment. The method starts at step 300. At step 310, an apparatus, e.g. such as the encoding apparatus 1000 of FIG. 10 comprising an encoder 1030, accesses a picture block. At step 320, a block of residuals is obtained, e.g. by subtracting a predictor from the accessed picture block. At step 330, the encoding apparatus 1000 builds a set of transforms for the picture block according the different choices of transform pairs for the horizontal and vertical directions and determines for each possibility the rate (number of bits required to code the transform coefficient) and distortion (compared to the original signal). The apparatus selects the transform with minimal rate distortion. In a specific embodiment, the set of transforms comprises the following transforms: DCT-II, DCT-VIII, DST-VII and SAT. SAT is listed here as a transform although it is not exactly a transform itself but a pair of transforms that vary according to the block dimensions. The transform may be selected by rate-distortion optimization and identified by an index. At step 340, the block of residuals is transformed into a block of transform coefficients using the identified transform. At step 350, the apparatus encodes the block of transform coefficients in a bitstream and inserts and information representative of the transform that was used. Encoding of transform coefficients conventionally comprises quantizing and entropy coding. The method ends at step 360.

**FIG.4** illustrates a flowchart of a method for decoding a picture block from a bitstream according to a specific and non-limiting embodiment. The method starts at step 400. At step 410, an apparatus such as a receiving apparatus 1000 of FIG. 10 comprising a decoder 1030 accesses a bitstream. At step 420, the receiver decodes information identifying a transform from the accessed bitstream. The information identifies a transform that was used for encoding, within a set of transforms. In a specific embodiment, the set of transforms comprises the following transforms: DCT-II, DCT-VIII, DST-VII and SAT. The transform may be identified by an index decoded from the bitstream. At step 430, a block of transform coefficients is decoded from the accessed bitstream. Decoding a block of transform coefficients usually comprises entropy decoding and inverse quantization. At step 440, the block of transform coefficients is transformed into a block of residuals using the identified transform. At step 450, a decoded picture block is obtained for example by adding a predictor to the block of residuals. The method ends at step 460.

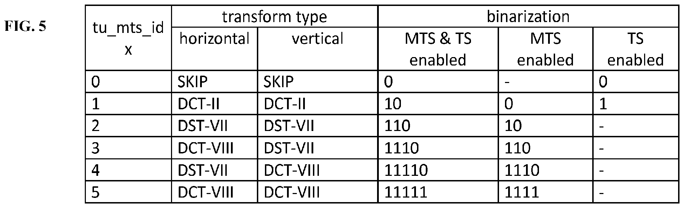

**FIG.5** illustrates a table of the transform possibilities of conventional encoding systems. In this table, the first column is the index of the transform selection, the second and third columns list the transforms to be used respectively for the horizontal and the vertical direction. The three last columns comprise a binary version of the signaling information related to the transform for a picture block. This table is hereafter named the transform table.

In at least one embodiment, the non-homogeneity of the transform design due to the inclusion of additional tools is handled by a high-level syntax for specifying the transform types and their associated signaling depending on the input data properties.

In a first embodiment, instead of specific transform selection for ISP or SBT, both transforms can use a technique similar than the shape adaptive transform selection for defining the horizontal and vertical transform. In other words, the decoder deduces the pair of the horizontal and vertical transform by checking the ratio between the transform block's width and height, in the same manner as the shape adaptive transform selection is implemented. The advantage of this method is that it eliminates the need for specific transform selection for ISP and SBT.

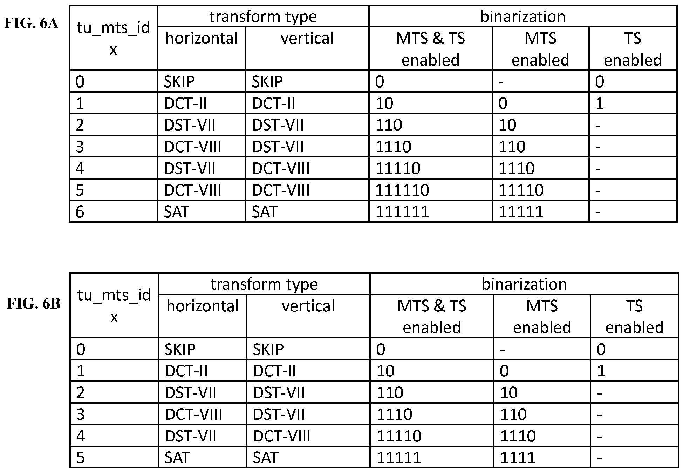

**FIG.6A** illustrates a transform table according to a second specific and non-limiting embodiment. In this embodiment, the size of the transform table is increased and a new entry for SAT is inserted at the bottom of the table. When the height and width of the considered block are the same, the predefined transform pair of the shape adaptive transform are both DCT-II. Thus, in this case, this pair is redundant as it is the same as the core transform and therefore the last line is omitted (not illustrated).

**FIG.6B** illustrates a transform table according to a variant of the second embodiment. In this embodiment, a pair with shape adaptive transform is replaced by an entry related to SAT. Usually, the pair of DCT-VIII for both horizontal and vertical transform is the least efficient in terms of coding efficiency and thus can be replaced by SAT. As seen in the second embodiment, if the block height and width are equal, there is no need for signaling the shape adaptive transform and thus in this case the last line of the transform table is omitted.

In both second and variant of second embodiments, the encoder can either select one of the available set of transforms pool or restrict its choice to the shape adaptive transform in order to limit the coding complexity and to capture as much as possible form from the coding efficiency.

The same can be done for either intra sub-partitioning or subblock transform. In other words, the same binarization and transform selection can be used. To keep the same coding complexity, the encoder can select only the shape adaptive transform to maintain a reasonable coding efficiency and complexity. It should be noticed, however, that for both ISP and SBT the transform sizes are not always available for DST-VII. For example, ISP may result is a transform block where the width or height are less than 4. In this way, shape adaptive transform is simply a DCT-II transform for both directions.

The main advantage of this embodiment is that the three different transform designs are merged into a single design. The encoder can select whether to use the full range of transform or a small set of them. The transform design for ISP or SBT is the same as for the typical transform blocks.

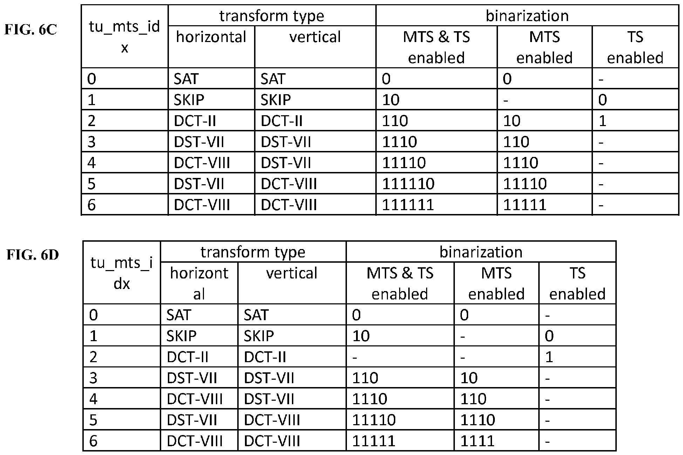

**FIG.6C** illustrates a transform table according to a third specific and non-limiting embodiment. In this embodiment, the transform selection of SBT and ISP is modified to favor the shape adaptive transform, as it appears from experimental studies that it well fits the residual statistics. As described above, when the width and height are equal, there is no need to signal the DCT-II transform for both horizontal and vertical direction. This is illustrated in **FIG.6D.** Optionally, the last pair of DCT-VIII for horizontal and vertical direction can be removed to simplify the table and since this combination is the least efficient in terms of coding efficiency (not illustrated).

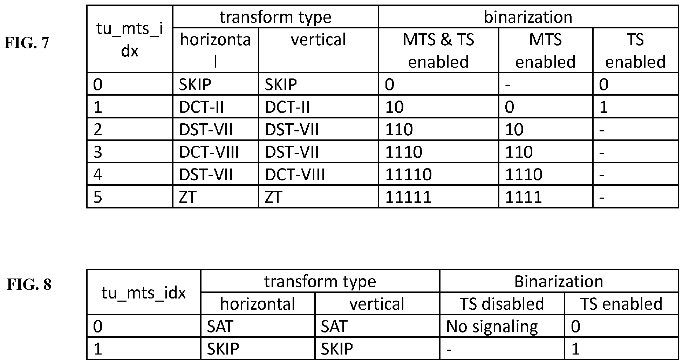

**FIG.7** illustrates a transform table according to a fourth specific and non-limiting embodiment. As described above, SBT sets the residual pixels of one of the two regions to zero. This case can be considered as a special case of transform pair where both horizontal and vertical transforms are zero. This transform pair can be added to the transform pools so that the encoder can optionally select this pair or the others from the pool. In an example embodiment, the pair of DCT-VIII for both horizontal and vertical directions is replaced with zero transform (ZT). In this way, the encoder can either test all the possible pairs, or restrict itself to selecting the zero transform for both horizontal and vertical transform. The same can be done similarly the previous embodiments by properly placing the zero transform.

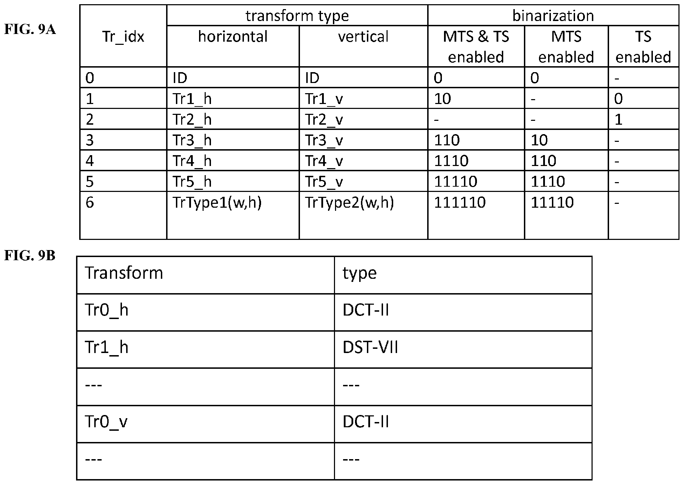

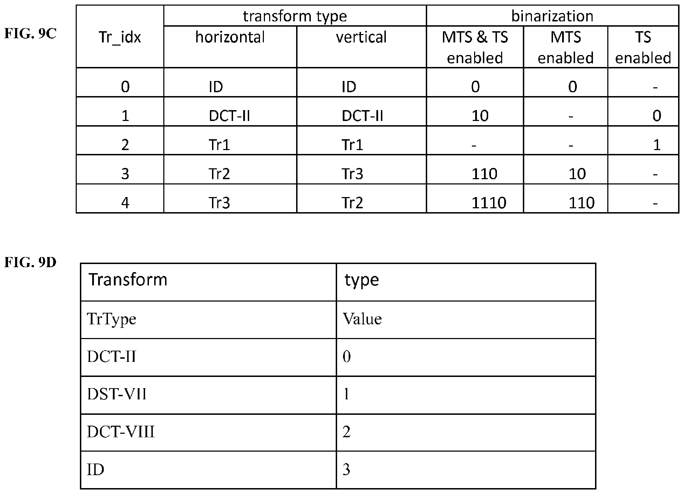

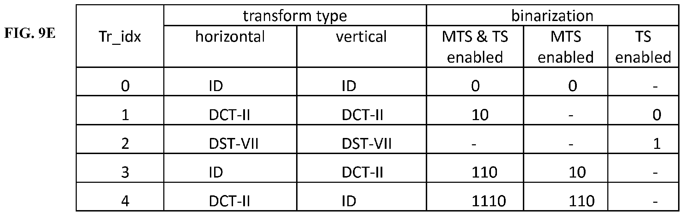

**FIG.8** illustrates a transform table according to a fifth specific and non-limiting embodiment. In this embodiment, a CTU (or CU, tile group header, tile header, slice,picture parameter set, sequence parameter set, GoP) flag can be set to indicate that the transform selection is either shape adaptive transform or transform skip if applicable. In this way, the signaling cost is eliminated. Moreover, the encoder time is highly reduced due to the reduction of the total number of possible pairs. When this flag is enabled, the binarization table (for normal block, SBT or ISP) becomes the one illustrated in FIG.9. Otherwise, the normal coding table is used, comprising DCT-II, MTS or transform skip. The main advantage of this embodiment is to enable two profiles of encoding: low-latency with only shape adaptive transform, or high latency with all transform pairs capabilities.

**FIG.9A** illustrates a transform table according to a sixth specific and non-limiting embodiment. This embodiment is a more generalized way of specifying the transform types. A table can be stored in sequence/picture/video parameters set to indicate the types of the transforms and their associated signaling. In the example of FIG.9A, TrType1(w,h) is the shape adaptive selection horizontal type. Moreover, the first pair has to be identity transform as that table still checks whether TS is enabled or not. The table is defined according to the application, sequence or complexity affordability. An example extract is shown in **FIG.9B.** The following transforms could be allowed: DCT-II, DST-VII, DCT-VIII, Skip (horizontal and vertical identity transform), Zero transform (horizontal and vertical). Further possibilities can be obtained by employing this embodiment. A first example is to allow the combination of identity transform and other transforms for in the coding of screen contents. Additionally, other transforms like Haar or Hadamard can well fit certain types of residuals with minimal coding complexity and could use such signaling technique. Furthermore, the shape adaptive selection can be also specified in the high-level syntax, where the pair of considered transform is described. For example, the shape adaptive transform may consider the combination of Haar and Identity transforms instead of DCT-II and DST-VII, where the former fits well the screen contents. To achieve the maximum coding efficiency, multiple transform table can be stored, and the encoder selects at the CTU/CU level which table to select the transforms from. In this way, all the variants can be obtained, and different profiling can be achieved.

**FIG.9C, FIG.9D** illustrate an example embodiment of this principle with 3 transforms. In this case, sps_num_tr_types is 3 and TSkip is and DCT-II are always present, but other types are encoded. **FIG.9E** illustrate the result of such example embodiment.

The tables illustrated above illustrate the binary values. The table 2 below illustrate an example of high-level syntax related to the coding of transform types in sequence parameter set. In this example, the transform table is carried by the "sps_transform[i]" entry identified by a grey background.

| seq_parameter_set_rbsp( ) { | Descriptor |
|---|---|
| sps_max_sub_layers_minus1 | u(3) |
| sps_reserved_zero_5bits | u(5) |
| profile_tier_level( sps_max_sub_layers_minus1 ) | |
| sps_seq_parameter_set_id | ue(v) |
| chroma_format_idc | ue(v) |
| if( chroma_format_idc == 3 ) | |
| separate_colour_plane_flag | u(1) |
| pic_width_in_luma_samples | ue(v) |
| pic_height_in_luma_samples | ue(v) |
| bit_depth_luma_minus8 | ue(v) |
| bit_depth_chroma_minus8 | ue(v) |
| log2_max_pic_order_cnt_lsb_minus4 | ue(v) |
| sps_max_dec_pic_buffering_minus1 | ue(v) |
| long_term_ref_pics_flag | u(1) |
| rpl1_same_as_rpl0_flag | u(1) |
| for( i = 0; i < !rpl1_same_as_rpl0_flag ? 2 : 1; i++ ) { | |
| num_ref_pic_lists_in_sps[ i ] | ue(v) |
| for( j = 0; j < num_ref_pic_lists_in_sps[ i ]; j++) | |
| ref_pic_list_struct( i, j ) | |
| } | |
| qtbtt_dual_tree_intra_flag | u(1) |
| log2_ctu_size_minus2 | ue(v) |
| log2_min_luma_coding_block_size_minus2 | ue(v) |
| partition_constraints_override_enabled_flag | u(1) |
| sps_log2_diff_min_qt_min_cb_intra_tile_group_luma | ue(v) |
| sps_log2_diff_min_qt_min_cb_inter_tile_group | ue(v) |
| sps_max_mtt_hierarchy_depth_inter_tile_group | ue(v) |

| | |
|---|---|
| **sps_max_mtt_hierarchy_depth_intra_tile_group_luma** | ue(v) |
| if( sps_max_mtt_hierarchy_depth_intra_tile_group_luma != 0 ) { | |
|    **sps_log2_diff_max_bt_min_qt_intra_tile_group_luma** | ue(v) |
|    **sps_log2_diff_max_tt_min_qt_intra_tile_group_luma** | ue(v) |
|    } | |
| if( sps_max_mtt_hierarchy_depth_inter_tile_groups != 0 ) { | |
|    **sps_log2_diff_max_bt_min_qt_inter_tile_group** | ue(v) |
|    **sps_log2_diff_max_tt_min_qt_inter_tile_group** | ue(v) |
|    } | |
| if( qtbtt_dual_tree_intra_flag ) { | |
|    **sps_log2_diff_min_qt_min_cb_intra_tile_group_chroma** | ue(v) |
|    **sps_max_mtt_hierarchy_depth_intra_tile_group_chroma** | ue(v) |
|    if ( sps_max_mtt_hierarchy_depth_intra_tile_group_chroma != 0 ) { | |
|       **sps_log2_diff_max_bt_min_qt_intra_tile_group_chroma** | ue(v) |
|       **sps_log2_diff_max_tt_min_qt_intra_tile_group_chroma** | ue(v) |
|       } | |
|    } | |
| **sps_sao_enabled_flag** | u(1) |
| **sps_alf_enabled_flag** | u(1) |
| **sps_pcm_enabled_flag** | u(1) |
| if( sps_pcm_enabled_flag ) { | |
|    **pcm_sample_bit_depth_luma_minus1** | u(4) |
|    **pcm_sample_bit_depth_chroma_minus1** | u(4) |
|    **log2_min_pcm_luma_coding_block_size_minus3** | ue(v) |
|    **log2_diff_max_min_pcm_luma_coding_block_size** | ue(v) |
|    **pcm_loop_filter_disabled_flag** | u(1) |
|    } | |
| **sps_ref_wraparound_enabled_flag** | u(1) |
| if( sps_ref_wraparound_enabled_flag ) | |
|    **sps_ref_wraparound_offset_minus1** | ue(v) |
| **sps_temporal_mvp_enabled_flag** | u(1) |
| if( sps_temporal_mvp_enabled_flag ) | |
|    **sps_sbtmvp_enabled_flag** | u(1) |
| **sps_amvr_enabled_flag** | u(1) |
| **sps_bdof_enabled_flag** | u(1) |
| **sps_affine_amvr_enabled_flag** | u(1) |
| **sps_dmvr_enabled_flag** | u(1) |
| **sps_cclm_enabled_flag** | u(1) |
| if( sps_cclm_enabled_flag && chroma_format_idc == 1 ) | |
|    **sps_cclm_colocated_chroma_flag** | u(1) |
| **sps_mts_enabled_flag** | u(1) |
| if( sps_mts_enabled_flag ) { | |
|    **sps_explicit_mts_intra_enabled_flag** | u(1) |
|    **sps_explicit_mts_inter_enabled_flag** | u(1) |
|    } | |
| **sps_num_tr_types** | u(v) |

| | |
|---|---|
| for( i=0; i< sps_num_tr_types-1; i++) | |
| { | |
|   sps_transform[i] | u(v) |
| } | |
|   sps_sbt_enabled_flag | u(1) |
|   if( sps_sbt_enabled_flag ) | |
|     sps_sbt_max_size_64_flag | u(1) |
|   sps_affine_enabled_flag | u(1) |
|   if( sps_affine_enabled_flag ) | |
|     sps_affine_type_flag | u(1) |
|   sps_gbi_enabled_flag | u(1) |
|   sps_ibc_enabled_flag | u(1) |
|   sps_ciip_enabled_flag | u(1) |
|   sps_fpel_mmvd_enabled_flag | u(1) |
|   sps_triangle_enabled_flag | u(1) |
|   sps_ladf_enabled_flag | u(1) |
|   if ( sps_ladf_enabled_flag ) { | |
|     sps_num_ladf_intervals_minus2 | u(2) |
|     sps_ladf_lowest_interval_qp_offset | se(v) |
|     for( i = 0; i < sps_num_ladf_intervals_minus2 + 1; i++ ) { | |
|       sps_ladf_qp_offset[ i ] | se(v) |
|       sps_ladf_delta_threshold_minus1[ i ] | ue(v) |
|     } | |
|   } | |
|   sps_extension_flag | u(1) |
|   if( sps_extension_flag ) | |
|     while( more_rbsp_data( ) ) | |
|       sps_extension_data_flag | u(1) |
|   rbsp_trailing_bits( ) | |
| } | |

*Table 2*

**FIG. 10** illustrates a block diagram of an example of a system in which various aspects and embodiments are implemented. System 1000 can be embodied as a device including the various components described below and is configured to perform one or more of the aspects described in this application. Examples of such devices include, but are not limited to, various electronic devices such as personal computers, laptop computers, smartphones, tablet computers, digital multimedia set top boxes, digital television receivers, personal video recording systems, connected home appliances, encoders, transcoders, and servers. Elements of system 1000, singly or in combination, can be embodied in a single integrated circuit, multiple ICs, and/or discrete components. For example, in at least one embodiment, the processing and encoder/decoder elements of system 1000 are distributed across multiple ICs and/or discrete components. In various embodiments, the system 1000 is communicatively coupled to other similar systems, or to other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, EEPROM, ROM, PROM, RAM, DRAM, SRAM, flash, magnetic disk drive, and/or optical disk drive. The storage device 1040 can include an internal storage device, an attached storage device, and/or a network accessible storage device, as non-limiting examples.

11

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In several embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of a television. In at least one embodiment, a fast dynamic volatile memory such as a RAM is used as working memory for video coding and decoding operations, such as for MPEG-2, HEVC, or VVC (Versatile Video Coding).

The input to the elements of system 1000 can be provided through various input devices as indicated in block 1130. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 1130 have associated respective input processing elements as known in the art. For example, the RF portion can be associated with elements necessary for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the I2C bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed to the system 1000, in various embodiments, using a Wi-Fi network such as IEEE 802.11. The Wi-Fi signal of these embodiments is received over the communications channel 1060 and the communications interface 1050 which are adapted for Wi-Fi communications. The communications channel 1060 of these embodiments is typically connected to an access point or router that provides access to outside networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130.

The system 1000 can provide an output signal to various output devices, including a display 1100, speakers 1110, and other peripheral devices 1120. The other peripheral devices 1120 include, in various examples of embodiments, one or more of a stand-alone DVR, a disk player, a stereo system, a lighting system, and other devices that provide a function based on the output of the system 1000. In various embodiments, control signals are communicated between the system 1000 and the display 1100, speakers 1110, or other peripheral devices 1120 using signaling such as AV.Link, CEC, or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs. The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, moving the information, copying the information, calculating the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory or optical media storage). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

In a variant embodiment of first, second, third, fourth aspect, or fifth aspect, the set of transform functions comprises at least discrete cosine transform of type-II, discrete cosine transform of type-VIII, discrete sine transform of type-VII, identity transform, shape adaptative transform and zero transform. In a variant embodiment of first, second, third, fourth aspect, or fifth aspect, the shape adaptive transform is the first transform and thus is represented by the shortest binary value. In a variant embodiment of first, second, third, fourth aspect, or fifth aspect, the zero transform is the last transform function and is represented by the longest binary value. In a variant embodiment of first, second, third, fourth aspect, or fifth aspect, the set of transform functions is limited to identity transform and shape adaptative transform so that the selected transform function is represented using a single bit. In a variant embodiment of first, second, third, fourth aspect, or fifth aspect, the set of transform functions are listed in a table and the selected transform function is identified by an entry in the table.

## Claims

1. A method for encoding picture data comprising

   - obtaining (320) information related to a picture block, at least comprising residuals,
   - selecting (330), amongst a set of transform function, the transform function providing the minimal rate distortion,
   - transforming (340) the residuals into transform coefficients using the selected transform function,
   - encoding (350) said block of transform coefficients and at least data representative of the selected transform function into a bitstream.

2. A method for decoding picture data comprising

   - decoding (420) from a bitstream information representative of a transform function,
   - decoding (430) a block of transform coefficients into residual coefficients,
   - transforming (440) the residual coefficients into a block of residuals using the inverse function of identified transform function,
   - decoding (450) picture data from block of residuals.

3. An apparatus (1000) comprising an encoder (1030) for encoding picture data, the encoder being configured to:

   - obtain (320) information related to a picture block, at least comprising residuals,
   - select (330), amongst a set of transform function, the transform function providing the minimal rate distortion,
   - transform (340) the residuals into transform coefficients using the selected transform function,
   - encode (350) said block of transform coefficients and at least data representative of the selected transform function into a bitstream.

4. An apparatus (1000) comprising a decoder (1030) for decoding picture data, the decoder being configured to:

   - decode (420) from a bitstream information representative of a transform function,
   - decode (430) a block of transform coefficients into residual coefficients,
   - transform (440) the residual coefficients into a block of residuals using the inverse function of identified transform function,
   - decode (450) picture data from block of residuals.

5. The method according to claim 1 or 2 or the apparatus according to claim 3 or 4 wherein the set of transform functions comprises at least discrete cosine transform of type-II, discrete cosine transform of type-VIII, discrete sine transform of type-VII, identity transform, shape adaptative transform and zero transform.

6. The method according to claim 1 or 2 or the apparatus according to claim 3 or 4 wherein the shape adaptive transform is the first transform and thus is represented by the shortest binary value.

7. The method according to claim 1 or 2 or the apparatus according to claim 3 or 4 wherein the zero transform is the last transform function and is represented by the longest binary value.

8. The method according to claim 1 or 2 or the apparatus according to claim 3 or 4 wherein the set of transform functions is limited to identity transform and shape adaptive transform so that the selected transform function is represented using a single bit.

9. The method according to claim 1 or 2 or the apparatus according to claim 3 or 4 wherein the set of transform functions are listed in a table and the selected transform function is identified by an entry in the table.

10. A video signal including a bitstream having video content and high level syntax information, said bitstream being generated according to the method of claim 1 or according to the device of claim 3, said high level syntax information comprising at least at least one parameter to identify the transform function used for at least one block of a picture of the video content.

11. Computer program comprising program code instructions executable by a processor for implementing the steps of a method according to at least one of claims 1 or 2.

12. Computer program product which is stored on a non-transitory computer readable medium and comprises program code instructions executable by a processor for implementing the steps of a method according to at least one of claims 1 or 2.

**100**

**FIG. 1**

**FIG. 2**

**FIG. 3**

Start — 300

Accessing a picture block — 310

obtaining information related to a picture block — 320

identifying a transform in a set of transforms — 330

transforming the block of residuals into a block of transform coefficients using the identified transform — 340

encoding said block of transform coefficients — 350

End — 360

**FIG. 4**

Start — 400

Accessing a bitstream — 410

decoding information identifying an inverse transform — 420

decoding a block of transform coefficients — 430

transforming a block of residual coefficients into a block of residuals using said identified inverse transform — 440

Obtaining decoded picture block from block of residuals and a predictor — 450

End — 460

FIG. 5

| tu_mts_id x | transform type | | binarization | | |
|---|---|---|---|---|---|
| | horizontal | vertical | MTS & TS enabled | MTS enabled | TS enabled |
| 0 | SKIP | SKIP | 0 | - | 0 |
| 1 | DCT-II | DCT-II | 10 | 0 | 1 |
| 2 | DST-VII | DST-VII | 110 | 10 | - |
| 3 | DCT-VIII | DST-VII | 1110 | 110 | - |
| 4 | DST-VII | DCT-VIII | 11110 | 1110 | - |
| 5 | DCT-VIII | DCT-VIII | 11111 | 1111 | - |

**FIG. 6A**

| tu_mts_id x | transform type | | binarization | | |
|---|---|---|---|---|---|
| | horizontal | vertical | MTS & TS enabled | MTS enabled | TS enabled |
| 0 | SKIP | SKIP | 0 | - | 0 |
| 1 | DCT-II | DCT-II | 10 | 0 | 1 |
| 2 | DST-VII | DST-VII | 110 | 10 | - |
| 3 | DCT-VIII | DST-VII | 1110 | 110 | - |
| 4 | DST-VII | DCT-VIII | 11110 | 1110 | - |
| 5 | DCT-VIII | DCT-VIII | 111110 | 11110 | - |
| 6 | SAT | SAT | 111111 | 11111 | - |

**FIG. 6B**

| tu_mts_id x | transform type | | binarization | | |
|---|---|---|---|---|---|
| | horizontal | vertical | MTS & TS enabled | MTS enabled | TS enabled |
| 0 | SKIP | SKIP | 0 | - | 0 |
| 1 | DCT-II | DCT-II | 10 | 0 | 1 |
| 2 | DST-VII | DST-VII | 110 | 10 | - |
| 3 | DCT-VIII | DST-VII | 1110 | 110 | - |
| 4 | DST-VII | DCT-VIII | 11110 | 1110 | - |
| 5 | SAT | SAT | 11111 | 1111 | - |

FIG. 6C

| tu_mts_idx | transform type | | binarization | | |
|---|---|---|---|---|---|
| | horizontal | vertical | MTS & TS enabled | MTS enabled | TS enabled |
| 0 | SAT | SAT | 0 | 0 | - |
| 1 | SKIP | SKIP | 10 | - | 0 |
| 2 | DCT-II | DCT-II | 110 | 10 | 1 |
| 3 | DST-VII | DST-VII | 1110 | 110 | - |
| 4 | DCT-VIII | DST-VII | 11110 | 1110 | - |
| 5 | DST-VII | DCT-VIII | 111110 | 11110 | - |
| 6 | DCT-VIII | DCT-VIII | 111111 | 11111 | - |

FIG. 6D

| tu_mts_idx | transform type | | binarization | | |
|---|---|---|---|---|---|
| | horizontal | vertical | MTS & TS enabled | MTS enabled | TS enabled |
| 0 | SAT | SAT | 0 | 0 | - |
| 1 | SKIP | SKIP | 10 | - | 0 |
| 2 | DCT-II | DCT-II | - | - | 1 |
| 3 | DST-VII | DST-VII | 110 | 10 | - |
| 4 | DCT-VIII | DST-VII | 1110 | 110 | - |
| 5 | DST-VII | DCT-VIII | 11110 | 1110 | - |
| 6 | DCT-VIII | DCT-VIII | 11111 | 1111 | - |

**FIG. 7**

| tu_mts_idx | transform type | | binarization | | |
|---|---|---|---|---|---|
| | horizontal | vertical | MTS & TS enabled | MTS enabled | TS enabled |
| 0 | SKIP | SKIP | 0 | - | 0 |
| 1 | DCT-II | DCT-II | 10 | 0 | 1 |
| 2 | DST-VII | DST-VII | 110 | 10 | - |
| 3 | DCT-VIII | DST-VII | 1110 | 110 | - |
| 4 | DST-VII | DCT-VIII | 11110 | 1110 | - |
| 5 | ZT | ZT | 11111 | 1111 | - |

**FIG. 8**

| tu_mts_idx | transform type | | Binarization | |
|---|---|---|---|---|
| | horizontal | vertical | TS disabled | TS enabled |
| 0 | SAT | SAT | No signaling | 0 |
| 1 | SKIP | SKIP | - | 1 |

**FIG. 9A**

| Tr_idx | transform type | | binarization | | |
|---|---|---|---|---|---|
| | horizontal | vertical | MTS & TS enabled | MTS enabled | TS enabled |
| 0 | ID | ID | 0 | 0 | - |
| 1 | Tr1_h | Tr1_v | 10 | - | 0 |
| 2 | Tr2_h | Tr2_v | - | - | 1 |
| 3 | Tr3_h | Tr3_v | 110 | 10 | - |
| 4 | Tr4_h | Tr4_v | 1110 | 110 | - |
| 5 | Tr5_h | Tr5_v | 11110 | 1110 | - |
| 6 | TrType1(w,h) | TrType2(w,h) | 111110 | 11110 | - |

**FIG. 9B**

| Transform | type |
|---|---|
| Tr0_h | DCT-II |
| Tr1_h | DST-VII |
| --- | --- |
| Tr0_v | DCT-II |
| --- | --- |

**FIG. 9C**

| Tr_idx | transform type | | binarization | | |
| --- | --- | --- | --- | --- | --- |
| | horizontal | vertical | MTS & TS enabled | MTS enabled | TS enabled |
| 0 | ID | ID | 0 | 0 | - |
| 1 | DCT-II | DCT-II | 10 | - | 0 |
| 2 | Tr1 | Tr1 | - | - | 1 |
| 3 | Tr2 | Tr3 | 110 | 10 | - |
| 4 | Tr3 | Tr2 | 1110 | 110 | - |

**FIG. 9D**

| Transform | type |
| --- | --- |
| TrType | Value |
| DCT-II | 0 |
| DST-VII | 1 |
| DCT-VIII | 2 |
| ID | 3 |

**FIG. 9E**

| Tr_idx | transform type | | binarization | | |
|--------|----------------|--------|-------------------|-----------------|---------------|
|        | horizontal | vertical | MTS & TS enabled | MTS enabled | TS enabled |
| 0 | ID | ID | 0 | 0 | - |
| 1 | DCT-II | DCT-II | 10 | - | 0 |
| 2 | DST-VII | DST-VII | - | - | 1 |
| 3 | ID | DCT-II | 110 | 10 | - |
| 4 | DCT-II | ID | 1110 | 110 | - |

1000

1010 Processor

1020 Memory

1070 Display Interface

1100 Display

1140

RF, COMP, USB, HDMI

1030 Encoder/ Decoder

1040 Storage Device

1080 Audio Interface

1110 Speakers

1090 Peripheral Interface

1120 Peripherals

1130

1050 Communications Interface

1060 Communications channel

**FIG. 10**

Europäisches
Patentamt

European
Patent Office

Office européen
des brevets

**EUROPEAN SEARCH REPORT**

Application Number

EP 19 30 5288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PHILIPPE (ORANGE) P ET AL: "Proposed improvements to the Adaptive multiple Core transform", 3. JVET MEETING; 26-5-2016 - 1-6-2016; GENEVA; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-C0022-v4, 27 May 2016 (2016-05-27), XP030150104, * page 1 - page 2 * | 1-4, 10-12 | INV. H04N19/176 H04N19/61 H04N19/12 H04N19/70 |
| X | US 2018/020218 A1 (ZHAO XIN [US] ET AL) 18 January 2018 (2018-01-18) | 1-7,9-12 | |
| Y | * paragraph [0108] - paragraph [0165] * | 8 | |
| Y | MASERA M ET AL: "Odd type DCT/DST for video coding: Relationships and low-complexity implementations", 2017 IEEE INTERNATIONAL WORKSHOP ON SIGNAL PROCESSING SYSTEMS (SIPS), IEEE, 3 October 2017 (2017-10-03), pages 1-6, XP033257060, DOI: 10.1109/SIPS.2017.8110009 [retrieved on 2017-11-14] * page 1 * | 8 | TECHNICAL FIELDS SEARCHED (IPC) H04N |

-/--

The present search report has been drawn up for all claims

| Place of search | Date of completion of the search | Examiner |
|---|---|---|
| Munich | 15 July 2019 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 30 5288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NASER (TECHNICOLOR) K ET AL: "CE6-related: MTS with Haar transform for Screen Contents Coding", 13. JVET MEETING; 20190109 - 20190118; MARRAKECH; (THE JOINT VIDEO EXPLORATION TEAM OF ISO/IEC JTC1/SC29/WG11 AND ITU-T SG.16 ), , no. JVET-M0354 13 January 2019 (2019-01-13), XP030201971, Retrieved from the Internet: URL:http://phenix.int-evry.fr/jvet/doc_end _user/documents/13_Marrakech/wg11/JVET-M03 54-v3.zip JVET-M0354_v3.docx [retrieved on 2019-01-13] * page 2, paragraph 2 * | 1-12 | |

TECHNICAL FIELDS
SEARCHED (IPC)

The present search report has been drawn up for all claims

| Place of search | Date of completion of the search | Examiner |
|---|---|---|
| Munich | 15 July 2019 | McGrath, Simon |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 19 30 5288

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2019

| Patent document cited in search report | Publication date | Patent family member(s) | Publication date |
|---|---|---|---|
| US 2018020218 A1 | 18-01-2018 | CN 109691101 A<br>EP 3485641 A1<br>KR 20190027815 A<br>US 2018020218 A1<br>WO 2018013953 A1 | 26-04-2019<br>22-05-2019<br>15-03-2019<br>18-01-2018<br>18-01-2018 |

EPO FORM P0459

For more details about this annex : see Official Journal of the European Patent Office, No. 12/82